# FASCICULE DE BREVET EUROPEEN

(11) **EP 2 412 253 B1**
(45) Date de publication et mention de la délivrance du brevet: **26.09.2012**
(21) Numéro de dépôt: 11173718.5
(22) Date de dépôt: 13.07.2011
(51) Int. Cl.: A23N 15/02, A01D 46/28, B07B 1/28

(54) **Machine d'égrappage comprenant une cage**
Entrappmaschine, die einen Käfig umfasst
Destalking machine with a cage

(30) Priorité: 28.07.2010 FR 1056194
(43) Date de publication de la demande: 01.02.2012
(60) Demande divisionnaire: 12159049.1
(73) Titulaire: Bucher Vaslin, 49290 Chalonnes sur Loire (FR)
(72) Inventeur: Noilet, Pascal, 49000 Angers (FR)
(74) Mandataire: Godineau, Valérie

(56) Documents cités:
- DE-U1- 8 808 236
- DE-U1- 20 310 936
- FR-A- 1 033 642
- FR-A1- 2 651 694
- FR-A1- 2 862 493
- US-A- 1 409 802
- US-A- 3 587 686
- US-A- 4 029 005

## Description

La présente invention concerne de manière générale les machines d'égrappage.

L'invention concerne plus particulièrement une machine d'égrappage comprenant une cage formée d'un élément tubulaire ouvert à ses extrémités, destinée à recevoir des grappes de baies, telles que des raisins avec leur rafle ou partiellement éraflées. La paroi périphérique de la cage présente des jours dimensionnés de manière à laisser passer lesdites baies.

Il convient de rappeler que l'opération d'égrappage permet de séparer des baies (par exemple des grains de raisins) des rafles.

On connait de l'état de la technique une machine d'égrappage telle que décrite ci-dessus dont la cage loge un arbre rotatif qui s'étend le long de l'axe de la cage comme l'illustre en particulier le brevet FR 2.651.694. Ledit arbre rotatif est équipé d'éléments de type pales ou doigts répartis le long de l'arbre rotatif selon une forme d'enroulement hélicoïdal. Lesdites pales permettent, par rotation de l'arbre qui les porte, de séparer les baies de la rafle et de pousser les baies vers les orifices ménagés à travers la paroi périphérique de la cage pour les évacuer à l'extérieur de la cage.

Pour faciliter le passage des baies au travers des trous formés sur la paroi de ladite cage et interdire le passage des rafles au travers desdits trous, la machine peut être équipée de moyens vibrants. Ces moyens vibrants sont dans l'incapacité d'assurer seuls la séparation des grains des rafles en raison de la faible amplitude du déplacement de la cage qui résulte du mouvement vibratoire.

En outre, on constate que l'évacuation des baies de la cage ajourée est très longue. On constate également que lesdites pales provoquent l'éclatement des baies soit en les poussant contre la paroi périphérique latérale de la cage soit par arrachement de morceaux de rafle lorsque la distance entre l'arbre et la cage est importante.

Enfin, une telle conception de la machine d'égrappage connue de l'état de la technique requiert un temps de séjour important des baies dans la cage, ce qui réduit le débit de travail de la machine.

Tous ces inconvénients sont notamment liés au fait que l'égrappage s'opère à l'aide d'un arbre d'égrappage qui a pour fonction de séparer le grain de la grappe par battage et de favoriser le transit entre l'alimentation et la sortie des rafles.

La présente invention a pour but de proposer une machine dont la conception permet de séparer les baies des rafles et d'évacuer les baies hors de la cage tout en réduisant le risque de détérioration des baies en rendant non nécessaire la présence d'un arbre d'égrappage.

Un autre but de la présente invention est de proposer une machine dont la conception permet, à l'aide d'une mécanique simplifiée, de séparer aisément et rapidement les baies des rafles et d'évacuer rapidement les baies de la cage avec un temps réduit de séjour des baies dans la cage.

Un autre but de la présente invention est de proposer une machine dont le système d'évacuation des baies à travers la paroi périphérique de la cage est plus efficace.

A cet effet, l'invention a pour objet une machine d'égrappage comprenant une cage formée d'un élément tubulaire ouvert à ses extrémités, destinée à recevoir des grappes de baies, telles que de la vendange composée de raisins et de rafles, la paroi périphérique de la cage présentant des jours dimensionnés de manière à laisser passer lesdites baies, caractérisée en ce que ladite machine comprend des moyens d'entraînement en déplacement de la cage selon un mouvement de va-et-vient transversal à l'axe longitudinal de ladite cage, ledit mouvement de va-et-vient étant apte à permettre d'une part, la séparation des baies des grappes, d'autre part l'expulsion des baies à travers les jours de la paroi périphérique de la cage, selon la revendication 1.

Ainsi, la machine selon l'invention permet de détacher les baies de leur rafle en utilisant un secouage de la grappe par balancement suivant une direction radiale par rapport à l'axe longitudinal de la cage et non à l'aide d'un arbre d'égrappage comme dans l'état de la technique.

En effet, le déplacement en va-et-vient de la cage permet de transmettre aux baies un mouvement alternatif suivant une direction radiale à l'axe longitudinal de la cage, ce qui leur permet de se détacher des rafles et d'être éjectées vers l'extérieur de la cage à travers les jours de la paroi périphérique de ladite cage.

En particulier, le mouvement de va-et-vient de la cage transversalement à son axe longitudinal permet d'utiliser l'inertie des baies pour les séparer de leur rafle. En effet, l'énergie cinétique des baies obtenue par le mouvement de va-et-vient de la cage entraine leur arrachement de la rafle, en particulier lors du changement de sens d'oscillation de la cage. La rafle étant prisonnière à l'intérieur de la cage, notamment à l'aide des moyens de retenue comme détaillé ci-après, sa course est brutalement contrariée lors d'un changement de sens de déplacement de la cage alors que les grains ont acquis une énergie cinétique suffisante pour se détacher de la rafle et continuer leur course à travers les jours de la paroi périphérique de la cage.

Pour obtenir un tel résultat de séparation des baies de la grappe au cours du mouvement de va-et-vient de la cage, les moyens d'entraînement en déplacement de la cage sont configurés pour, en au moins un emplacement de la longueur de la cage, faire parcourir à la cage pendant au moins une partie de la période d'entraînement en déplacement de la cage une distance au moins égale à 60 mm, de préférence comprise entre 60 et 160 mm, lors du mouvement aller ou du mouvement retour de ladite cage.

En effet, il est constaté qu'en dessous d'un déplacement minimum de 60 mm de la cage, il n'y a pas d'érafflage. A l'inverse, au-dessus de la valeur maximale de 160 mm, on altère l'intégrité de la pellicule de la baie et on pousse la rafle à traverser l'ajourage de la cage. Cela se traduit par une vendange triturée et une augmentation des déchets verts. Lorsque la cage se déplace avec son axe longitudinal maintenu parallèle à lui-même, la distance minimale de déplacement de 60 mm est respectée sur la totalité de la longueur de la cage.

De préférence, les moyens d'entraînement en déplacement de la cage sont configurés pour, au moins en un emplacement de la longueur de la cage, faire présenter à la cage, à mi-chemin de la trajectoire parcourue par la cage lors de sa course aller ou de sa course retour, une vitesse de déplacement au moins égale à 0,5 m/s, de préférence comprise entre 0,5 et 4 m/s pendant au moins une partie de la période d'entraînement en déplacement de la cage.

Autrement dit, en fonctionnement de la machine, la cage présente, pendant au moins une partie de sa période d'entraînement en déplacement, correspondant à la phase dite active d'égrappage, une amplitude de mouvement au moins égale à 60 mm, de préférence comprise entre 60 et 160 mm et une vitesse de déplacement au moins égale à 0,5 m/s, de préférence comprise entre 0,5 et 4 m/s.

Selon une caractéristique avantageuse de l'invention, l'une des extrémités de la cage formant l'entrée d'introduction des grappes et l'extrémité opposée de la cage formant sortie d'évacuation des rafles, la cage est couplée à des moyens supports de telle sorte que la cage présente ou est apte à occuper au moins une position dans laquelle l'entrée de la cage est située au dessus de la sortie de ladite cage.

Préférentiellement, lesdits moyens d'entraînement en déplacement de la cage sont des moyens d'entraînement au moins en pivotement de la cage autour d'un axe, distinct de l'axe longitudinal de la cage, de préférence extérieur à la cage.

Le pivotement de la cage permet de donner une impulsion sensiblement courbe aux grappes dans la cage, ce qui favorise la séparation des baies et leur éjection à travers les jours de la paroi périphérique de la cage.

Avantageusement, la machine présente au moins une configuration dans laquelle l'axe longitudinal de la cage forme un angle non nul avec l'axe de pivotement desdits moyens d'entraînement.

L'inclinaison de l'axe de la cage par rapport à l'axe de pivotement permet de faire varier l'amplitude des mouvements transversaux subis par les baies le long de la cage entre l'entrée et la sortie de la cage et ainsi d'augmenter progressivement la force de séparation appliquée aux baies par rapport aux rafles au cours de leur parcours le long de la cage.

Selon une autre caractéristique avantageuse de l'invention, ladite machine comprend des moyens de réglage de l'angle formé entre l'axe longitudinal de la cage et l'axe de pivotement de ladite cage.

Selon une autre caractéristique avantageuse de l'invention, l'une des extrémités de la cage formant l'entrée d'introduction des grappes et l'extrémité opposée de la cage formant sortie d'évacuation des rafles, la distance entre l'entrée de la cage et l'axe de pivotement de la cage est inférieure à la distance entre la sortie de la cage et l'axe de pivotement de la cage.

De préférence, lesdits moyens d'entraînement de la cage selon un mouvement de va-et-vient comprennent un moteur rotatif et un système de transformation de mouvement couplé audit moteur de manière à transformer le mouvement de rotation du moteur en un mouvement de va-et-vient.

Avantageusement, lesdits moyens d'entraînement comprennent un arbre solidaire de, ou solidarisable à, la cage et d'axe confondu avec ledit axe de pivotement de la cage, ledit arbre étant monté pivotant autour de son axe et couplé audit système de transformation de mouvement lorsque celui-ci est présent.

Préférentiellement, ledit système de transformation de mouvement couplé, d'une part, au moteur rotatif et, d'autre part, à l'arbre pivot solidaire de, ou solidarisable à, la cage, est un système de type bielle/manivelle.

De préférence, la cage est une cage montée fixe à rotation ou libre à rotation autour de son axe longitudinal. En d'autres termes, la cage est dépourvue de moyens d'entraînement en rotation de la cage autour de son axe longitudinal.

Selon une caractéristique avantageuse de l'invention, la machine comprenant un châssis, la cage est montée orientable par rapport audit châssis pour occuper différentes positions inclinées par rapport au châssis.

Le réglage de l'inclinaison de l'axe longitudinal de la cage permet de jouer sur l'énergie à appliquer aux baies pour les séparer des rafles et sur le débit de travail de la machine. En effet, lorsque la cage est inclinée dans une position proche de la verticale, les grappes séjournent peu de temps dans la cage ce qui permet d'augmenter le débit de travail. En outre, en position verticale de la cage, les grappes sont libérées des contacts gravitaires avec la paroi périphérique de la cage, ce qui réduit le risque d'altération desdites baies et facilite leur détachement des rafles.

Avantageusement, la paroi périphérique de la cage est formée de barreaux longitudinaux, de préférence souples, écartés les uns des autres pour délimiter les jours de la paroi périphérique de la cage. La paroi périphérique de la cage peut également être formée d'une paroi à trous.

Selon une caractéristique avantageuse de l'invention, la cage comprend des moyens de retenue ou de ralentissement de l'avance des grappes dans la cage. Préférentiellement, lesdits moyens de retenue ou de ralentissement sont formés par des tiges, encore appelées doigts, de préférence souples, transversales à l'axe longitudinal de la cage, de préférence en disposition rayonnante par rapport à l'axe longitudinal de la cage, qui pénètrent au moins partiellement dans ladite cage de manière à réduire la section de passage à l'intérieur de la cage en au moins une position donnée le long de la cage.

De tels moyens de retenue ou de ralentissement de l'avance des grappes dans la cage permettent de ralentir les grappes dans la cage et donc de les maintenir dans la cage le temps de leur égrappage total. Lesdites tiges des moyens de retenue ou de ralentissement forment également des doigts de décompactage des grappes.

En variante, les moyens de retenue ou de ralentissement de l'avancement des grappes dans la cage sont formés par une variation de la section de passage de la cage. La cage peut ainsi être formée à la manière d'un diabolo par deux sections de passage élargies séparées par une section de passage de dimension réduite, le profil en diabolo étant éventuellement répété une ou plusieurs fois.

Selon une autre caractéristique avantageuse de l'invention, lesdits moyens d'entraînement de la cage selon un mouvement de va-et-vient comprennent des moyens de réglage de l'amplitude du mouvement de va-et-vient de la cage.

L'invention a encore pour objet un procédé d'égrappage à l'aide d'une machine d'égrappage conforme à celle décrite ci-dessus, caractérisé en ce que ledit procédé comprend, à des fins d'égrappage, une étape d'entraînement en va-et-vient de la cage suivant une trajectoire prédéterminée au cours de laquelle la cage, en au moins un emplacement de sa longueur, parcourt, lors de sa course aller ou de sa course retour, sur au moins une partie de la période d'entraînement en déplacement de la cage une distance au moins égale à 60 mm, de préférence comprise entre 60 et 160 mm, et est, au cours de son déplacement, entraînée sur au moins une partie de sa trajectoire à une vitesse au moins égale à 0,5 m/s, de préférence comprise entre 0,5 et 4 m/s.

L'invention sera bien comprise à la lecture de la description suivante d'exemples de réalisation, en référence aux dessins annexés dans lesquels :
- la figure 1 est une vue en perspective de la machine selon l'invention ;
- la figure 2 est une vue de face de la machine selon l'invention pour laquelle l'amplitude de débattement de la cage est réglée de manière à être minimale ;
- la figure 3 est une vue de face de la machine selon l'invention pour laquelle l'amplitude de débattement de la cage est réglée de manière à être maximale ;
- les figures 3A à 3D représentent chacune une vue de face de la machine selon l'invention au cours du déplacement en va-et-vient de la cage.
- la figure 4 est une vue en perspective d'une machine selon l'invention conformément à une variante de réalisation selon laquelle ladite machine est équipée de deux cages disposées parallèlement et commandées à pivotement en va-et-vient par des moyens d'entraînement partiellement communs.

En référence aux figures et comme rappelé ci-dessus, l'invention concerne une machine d'égrappage, ou d'éraflage, comprenant une cage 2 formée d'un élément tubulaire 20 à entrée 2A et sortie axiales 2B, destinée à recevoir des grappes de baies, telles que des raisins avec leur rafle. Les grappes peuvent déjà être partiellement éraflées. Dans l'exemple illustré aux figures, la cage 2 présente un corps cylindrique de section circulaire. En variante, le corps tubulaire de la cage peut être tronconique, cintré et/ou de section variable.

Le corps tubulaire de l'élément 20 tubulaire constitutif de la surface périphérique ou paroi périphérique de la cage présente des jours dimensionnés de manière à laisser passer lesdites baies, tout en empêchant le passage des rafles qui finissent par être évacuées par la sortie 2B de la cage.

De manière caractéristique à l'invention, ladite machine comprend des moyens d'entraînement 5, 3, 6 en déplacement de la cage 2 selon un mouvement de va-et-vient transversal à l'axe A2 longitudinal de ladite cage 2 pour permettre d'une part, la séparation des baies des grappes, d'autre part, l'expulsion des baies à travers les jours de la paroi périphérique de la cage. La cage 2 est non rotative autour de son axe longitudinal A2.

Une telle caractéristique de déplacement en va-et-vient de la cage suivant une direction transversale à l'axe A2 longitudinal de ladite cage 2 permet de transmettre aux baies un mouvement alternatif suivant une direction radiale à l'axe de la cage, ce qui leur permet de se détacher des rafles et d'être éjectées à l'extérieur de la cage à travers les jours de la paroi périphérique de ladite cage.

En configuration d'utilisation de la machine, la cage est inclinée par rapport à l'horizontale. En particulier, la cage 2 est couplée à des moyens supports 4 de telle sorte que l'entrée 2A de la cage 2 est située au dessus de la sortie 2B de ladite cage 2, pour permettre une avance par gravité des produits contenus dans la cage.

Lesdits moyens d'entraînement 5, 3, 6 en déplacement de la cage 2 sont des moyens d'entraînement au moins en pivotement de la cage 2 autour d'un axe A3, distinct de l'axe A2 longitudinal de la cage 2, de préférence extérieur à la cage 2. Les baies contenues dans la cage sont ainsi soumises à un mouvement de va-et-vient de type pendulaire, suivant une trajectoire courbe. Par pivotement alternatif de la cage autour dudit axe A3, les baies sont accélérées et, grâce à leur inertie, se détachent des rafles en étant éjectées radialement hors de la cage 2.

De préférence, les moyens d'entraînement 5, 3, 6 en déplacement de la cage 2 sont configurés pour au moins, en un emplacement de la longueur de la cage 2, faire parcourir à la cage 2 une distance au moins égale à 60 mm, de préférence comprise entre 60 et 160 mm, lors du mouvement aller ou du mouvement retour de ladite cage 2.

Les moyens d'entraînement 5, 3, 6 en déplacement de la cage 2 sont configurés pour, au moins en un emplacement de la longueur de la cage 2, faire présenter à la cage 2, à mi-chemin de la trajectoire parcourue par la cage 2 lors de sa course aller ou de sa course retour, une vitesse de déplacement au moins égale à 0,5 m/s, de préférence comprise entre 0,5 et 4 m/s.

L'axe A2 longitudinal de la cage 2 forme un angle de préférence non nul avec l'axe de pivotement A3 desdits moyens d'entraînement 5, 3, 6. En particulier, l'une des extrémités de la cage 2 formant l'entrée 2A d'introduction des grappes et l'extrémité opposée de la cage 2 formant sortie 2B d'évacuation des rafles, la distance entre l'entrée 2A de la cage 2 et l'axe de pivotement A3 de la cage 2 est inférieure à la distance entre la sortie 2B de la cage 2 et l'axe de pivotement A3 de la cage 2.

Ainsi, l'entrée 2A de la cage est située à proximité du sommet du balancier. En effet, le sommet du balancier est situé à proximité du point d'intersection entre l'axe A2 de la cage et l'axe A3 de pivotement de ladite cage, qui constitue un point neutre d'amplitude. Ainsi, l'entrée 2A de la cage ne subit qu'un faible débattement par rapport à son extrémité opposée qui forme la sortie 2B d'évacuation de la cage, ce qui facilite le remplissage de la cage.

Le mouvement pendulaire de la cage par pivotement de la cage autour d'un axe A3 non parallèle à son axe A2 permet aux baies avec une liaison à la grappe de faible résistance de se détacher rapidement, et aux baies avec une liaison à la grappe de plus grande résistance d'avancer le long de la cage et d'être soumises au fur et à mesure de leur avancée vers la sortie de la cage à des mouvements de plus grande amplitude. Ainsi, les efforts transversaux subis par les baies du fait des oscillations de la cage augmentent au fur et à mesure que lesdites grappes avancent vers la sortie de la cage. En effet, plus les grappes se rapprochent de la sortie 2B de la cage, qui est éloignée de l'axe A3, plus elles sont soumises à des déplacements de grande amplitude autour dudit axe A3 de pivotement de la cage.

De manière générale, les moyens d'entraînement en déplacement de la cage sont configurés pour générer, au niveau de la baie une force d'inertie de préférence supérieure à 0,5 N, pour assurer la séparation de la baie de la grappe.

L'angle entre l'axe A2 de la cage et l'axe A3 de pivotement définit la différence d'amplitude entre l'entrée 2A et la sortie 2B de la cage 2.

Ladite machine comprend également des moyens de réglage 32 de l'angle formé entre l'axe A2 longitudinal de la cage 2 et l'axe A3 de pivotement de ladite cage 2, ce qui permet d'augmenter ou de réduire les efforts transversaux auxquels sont soumises les baies, en particulier à proximité de la sortie de la cage.

Lesdits moyens d'entraînement 5, 3, 6 de la cage 2 comprennent un moteur rotatif 5 et un système de transformation de mouvement 6 couplé audit moteur 5 de manière à transformer le mouvement de rotation du moteur 5 en un mouvement de va-et-vient.

Lesdits moyens d'entraînement 5, 3, 6 comprennent également un arbre 3 solidaire en rotation de la cage 2 et d'axe A3 confondu avec ledit axe A3 de pivotement de la cage 2. Ledit arbre 3 est extérieur à la cage. Cet arbre 3 est monté pivotant dans un palier 43 autour de son axe A3 et couplé audit système de transformation de mouvement 6 comme détaillé ci-après.

Dans l'exemple illustré aux figures, le palier 43 porte également au niveau de sa paroi périphérique externe le moteur 5.

Ledit système de transformation 6 de mouvement est un système de type bielle/manivelle. Dans l'exemple illustré aux figures, ledit système de transformation de mouvement 6 comprend trois éléments de transmission de mouvements articulés entre eux et formés de deux éléments de transmission dits d'extrémité, couplés l'un 60 à l'arbre de sortie du moteur 5, l'autre 62 à l'arbre 3 pivot, et d'un élément de transmission intermédiaire 61 couplé à chacun desdits éléments de transmission d'extrémité 60, 62 en des positions décentrées des axes respectifs de l'arbre de sortie 50 du moteur 5 et de l'arbre 3 pivot.

La machine comprend des moyens supports 4 dudit arbre 3 pivot formés d'une base 42 destinée à être positionnée de préférence au sol, d'un bras support 40 couplé à ladite base 42 et d'un palier 43 solidaire dudit bras support 40 pour recevoir l'arbre 3 pivot. Ladite machine comprend également des moyens de réglage 41 de l'inclinaison du bras support 40, et donc dudit arbre 3 pivot, par rapport à ladite base 42. De tels moyens de réglage 41 d'inclinaison permettent, éventuellement en coopération avec les moyens de réglage d'inclinaison 32 entre l'axe A2 de la cage et l'axe A3 de pivotement de la cage, de faire varier l'inclinaison de la cage entre une position horizontale et une position verticale. L'inclinaison de la cage dans une position proche de la verticale permet aux baies de ne plus être en appui par gravité contre la paroi périphérique de la cage et ainsi de favoriser leur mouvement radial alternatif et donc leur détachement par rapport aux rafles. Bien entendu, dans une telle configuration proche de la verticale, la cage 2 est équipée, comme détaillé ci-après, de moyens de retenue ou de ralentissement 22 de l'avancée des baies le long de cage en direction de la sortie d'évacuation.

De préférence, la cage présente une forme inscrite dans un cylindre et a une section circulaire.

La paroi périphérique de la cage 2 peut être formée de barreaux longitudinaux écartés les uns des autres pour délimiter les jours de la paroi périphérique de la cage 2. Lesdits barreaux sont formés par des tiges, de préférence souples, tendues entre les extrémités de la cage.

Comme rappelé ci-dessus, la cage 2 comprend des moyens de retenue ou de ralentissement 22 de l'avance des grappes dans la cage. Dans l'exemple illustré aux figures, lesdits moyens de retenue ou de ralentissement sont formés par des tiges 22, de préférence souples, transversales à l'axe A2 longitudinal de la cage 2, de préférence en disposition rayonnante par rapport à l'axe A2 longitudinal de la cage 2. Lesdites tiges pénètrent au moins partiellement dans ladite cage 2 de manière à réduire la section de passage à l'intérieur de la cage 2 en au moins une position donnée le long de la cage.

Lesdites tiges restent écartées de l'axe A2 de la cage pour laisser libre un espace de passage pour les rafles le long de la cage tout en ralentissant leur avancée en les agrippant au niveau des zones proches de la paroi périphérique où se situent lesdites tiges.

Lesdites tiges sont également inclinées d'un angle aigu par rapport à l'axe A2 de la cage de manière à définir un entonnoir dont l'entrée de plus grande ouverture est située côté entrée de la cage.

Dans l'exemple illustré aux figures, lesdits moyens de retenues ou ralentissement 22 comprennent deux séries de tiges formant deux entonnoirs disposés en deux positions distinctes le long de la cage, l'un sensiblement à mi-chemin entre l'entrée et la sortie de la cage et l'autre à proximité de la sortie de la cage.

En variante, on peut prévoir que la cage comprend au moins une partie qui présente un profil, dit en diabolo, formé de deux sections de passage élargies séparées par une section de passage de dimension réduite qui forme lesdits moyens de retenue ou de ralentissement.

Lesdits moyens d'entraînement 5, 3, 6 de la cage 2 comprennent des moyens de réglage de l'amplitude du mouvement de va-et-vient de la cage 2. En particulier, lesdits moyens de réglage de l'amplitude de pivotement sont formés par des moyens de réglage de la position de couplage de l'élément de transmission intermédiaire 61 le long de l'un 60 et/ou de l'autre 62 élément de transmission d'extrémité.

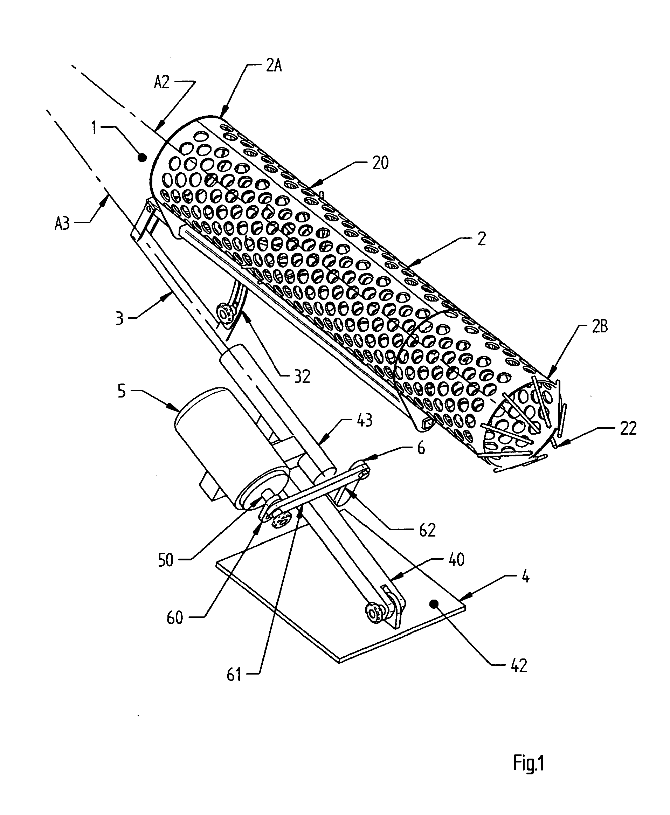

Ainsi, dans le mode de réalisation illustré à la figure 1, lesdits moyens de réglage d'amplitude sont formés par un système de réglage de la position de couplage de l'élément de transmission intermédiaire 61 le long de l'élément de transmission d'extrémité 62 solidaire de l'arbre pivot 3. Ledit système de réglage est composé d'une rainure traversante ménagée le long de l'élément de transmission 62 et d'un système de vis permettant de fixer la position de l'élément de transmission 61 le long de la fente de l'élément de transmission 62 tout en autorisant l'articulation entre lesdits éléments de transmission 61, 62.

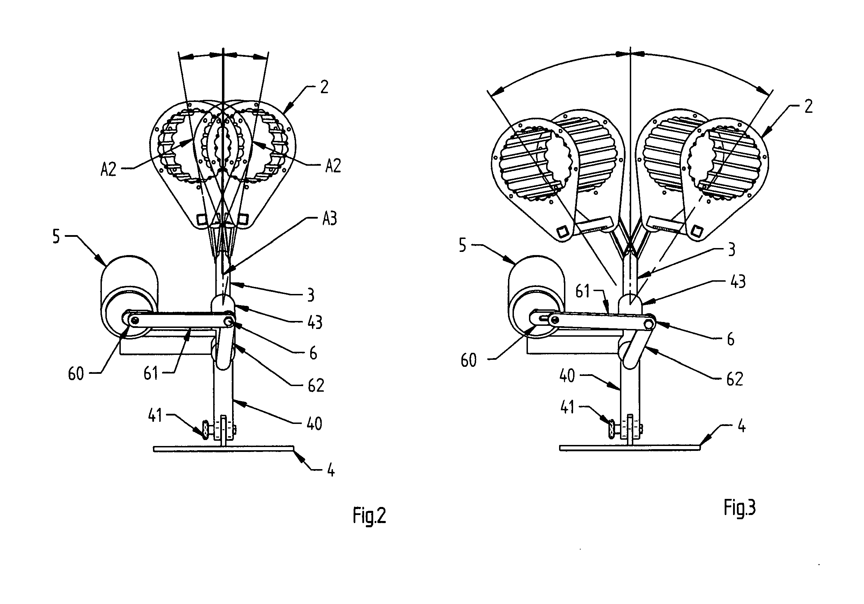

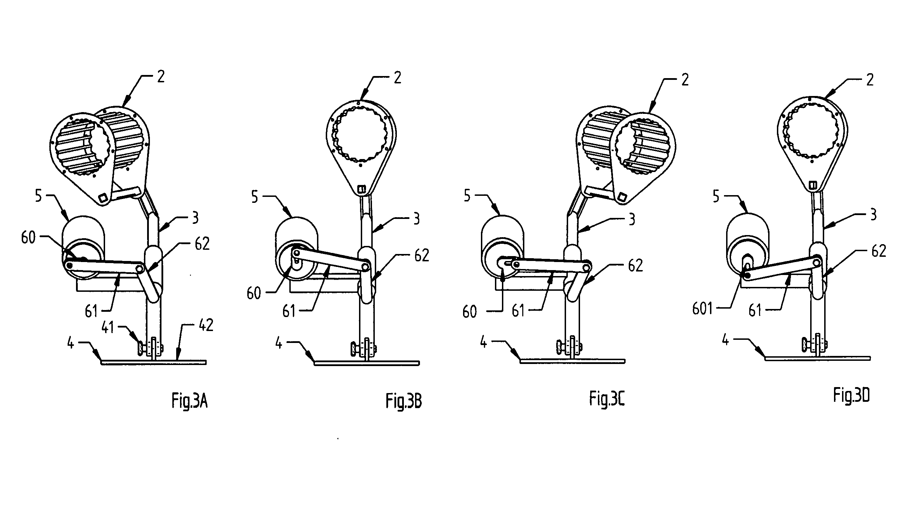

Dans l'exemple illustré aux figures 2 et 3, lesdits moyens de réglage d'amplitude sont formés par un système de réglage de la position de couplage de l'élément de transmission intermédiaire 61 le long de l'élément de transmission d'extrémité 60 solidaire de l'arbre 50 de sortie du moteur 5. Ledit système de réglage est composé d'une rainure traversante 601 ménagée le long de l'élément de transmission 60 et d'un système de vis permettant de fixer la position de l'élément de transmission 61 le long de la fente de l'élément de transmission 60 tout en autorisant l'articulation entre lesdits éléments de transmission 61, 60. Comme illustré aux figures 2 et 3, plus la position d'articulation entre lesdits éléments de transmission 61, 60 est éloignée de l'axe de rotation du moteur 5, plus l'amplitude du mouvement de va-et-vient de la cage 2 est importante.

La fréquence du mouvement alternatif ou de balancement de la cage 2 dépend de la vitesse de rotation du moteur 5. Avantageusement, la machine comprend des moyens de réglage de la vitesse de rotation du moteur, pour régler la fréquence d'agitation de la cage.

Selon une variante de réalisation non illustrée aux figures, éventuellement combinable avec les modes de réalisation décrits ci-dessus, on peut également prévoir que lesdits moyens d'entraînement 5, 3, 6 en déplacement de la cage 2 sont des moyens d'entraînement en déplacement au moins par translation de la cage 2 selon un mouvement de va-et-vient suivant un axe transversal à l'axe de la cage 2.

Les mêmes contraintes en terme de distance minimale à parcourir pour la cage et de vitesse minimale de déplacement doivent être observées pour atteindre le résultat attendu, à savoir la séparation des baies des grappes.

Il est également possible de prévoir que la machine comprenne plusieurs cages déplaçables en va-et-vient transversalement à leur axe longitudinal à l'aide de moyens d'entraînement au moins partiellement communs.

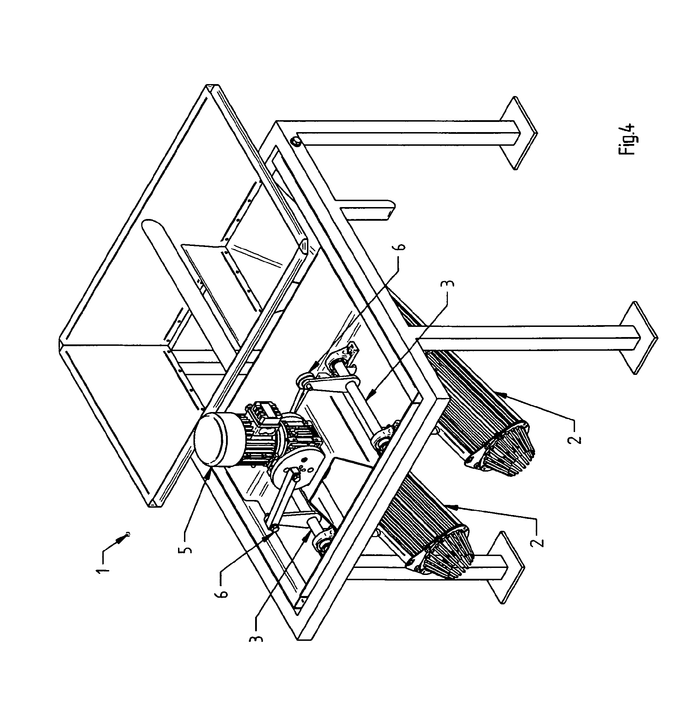

Dans l'exemple illustré à la figure 4, ladite machine comprend deux cages 2 disposées parallèlement. Chacune des cages 2 est montée solidaire en rotation d'un arbre pivot 3 comme détaillé ci-dessus. Lesdits arbres pivots sont agencés parallèlement l'un à l'autre et couplés à un même moteur 5 par l'intermédiaire de moyens de transformation de mouvements 6 tels que décrits ci-dessus qui permettent de transformer le mouvement de rotation du moteur 5 en un mouvement de pivotement alternatif de chaque arbre pivot 3 pour faire osciller chaque cage 2 autour de l'axe de l'arbre pivot 3 correspondant.

## Revendications

1. Machine d'égrappage comprenant une cage (2) formée d'un élément tubulaire (20) ouvert à ses extrémités, destinée à recevoir des grappes de baies, telles que des raisins avec leur rafle,
la paroi périphérique de la cage présentant des jours dimensionnés de manière à laisser passer lesdites baies,
**caractérisée en ce que** ladite machine comprend des moyens d'entraînement (5, 3, 6) en déplacement de la cage (2) selon un mouvement de va-et-vient transversal à l'axe (A2) longitudinal de ladite cage (2), ledit mouvement de va-et-vient étant apte à permettre d'une part, la séparation des baies des grappes, d'autre part l'expulsion des baies à travers les jours de la paroi périphérique de la cage, les moyens d'entraînement (5, 3, 6) en déplacement de la cage (2) étant configurés pour, en au moins un emplacement de la longueur de la cage (2), faire parcourir à la cage (2) pendant au moins une partie de la période d'entraînement en déplacement de la cage une distance au moins égale à 60 mm, de préférence comprise entre 60 et 160 mm, lors du mouvement aller ou du mouvement retour de ladite cage (2).

2. Machine selon la revendication 1, **caractérisée en ce que** les moyens d'entraînement (5, 3, 6) en déplacement de la cage (2) sont configurés pour, au moins en un emplacement de la longueur de la cage (2), faire présenter à la cage (2), à mi-chemin de la trajectoire parcourue par la cage (2) lors de sa course aller ou de sa course retour, une vitesse de déplacement au moins égale à 0,5 m/s, de préférence comprise entre 0,5 et 4 m/s pendant au moins une partie de la période d'entraînement en déplacement de la cage.

3. Machine selon l'une des revendications 1 ou 2, **caractérisée en ce que** l'une des extrémités de la cage (2) formant l'entrée d'introduction des grappes et l'extrémité opposée de la cage (2) formant sortie d'évacuation des rafles, la cage (2) est couplée à des moyens supports (4) de telle sorte que la cage (2) présente ou est apte à occuper au moins une position dans laquelle l'entrée (2A) de la cage (2) est située au dessus de la sortie (2B) de ladite cage (2).

4. Machine selon l'une des revendications précédentes, **caractérisée en ce que** lesdits moyens d'entraînement (5, 3, 6) en déplacement de la cage (2) sont des moyens d'entraînement (5, 3, 6) au moins en pivotement de la cage (2) autour d'un axe (A3), distinct de l'axe (A2) longitudinal de la cage (2), de préférence extérieur à la cage (2).

5. Machine selon la revendication 4, **caractérisée en ce que** la machine comprend au moins une configuration dans laquelle l'axe (A2) longitudinal de la cage (2) forme un angle non nul avec l'axe de pivotement (A3) desdits moyens d'entraînement (5, 3, 6).

6. Machine selon la revendication 5, **caractérisée en ce qu'**elle comprend des moyens de réglage (32) de l'angle formé entre l'axe (A2) longitudinal de la cage (2) et l'axe (A3) de pivotement de ladite cage (2).

7. Machine selon l'une des revendications précédentes prise en dépendance de la revendication 4, **caractérisée en ce que**, l'une des extrémités de la cage (2) formant l'entrée (2A) d'introduction des grappes et l'extrémité opposée de la cage (2) formant sortie (2B) d'évacuation des rafles, la distance entre l'entrée (2A) de la cage (2) et l'axe de pivotement (A3) de la cage (2) est inférieure à la distance entre la sortie (2B) de la cage (2) et l'axe de pivotement (A3) de la cage (2).

8. Machine selon l'une des revendications précédentes, **caractérisée en ce que** lesdits moyens d'entraînement (5, 3, 6) de la cage (2) selon un mouvement de va-et-vient comprennent un moteur rotatif (5) et un système de transformation de mouvement (6) couplé audit moteur (5) de manière à transformer le mouvement de rotation du moteur (5) en un mouvement de va-et-vient.

9. Machine selon la revendication 8, **caractérisée en ce que**, ledit système de transformation (6) de mouvement couplé, d'une part, au moteur (5) rotatif et, d'autre part, à l'arbre (3) pivot solidaire de, ou solidarisable à, la cage (2), est un système de type bielle/manivelle.

10. Machine selon l'une des revendications précédentes prise en dépendance de la revendication 4, **caractérisée en ce que** lesdits moyens d'entraînement (5, 3, 6) en déplacement de la cage (2) comprennent un arbre (3) solidaire de, ou solidarisable à, la cage (2) et d'axe (A3) confondu avec ledit axe (A3) de pivotement de la cage (2), ledit arbre (3) étant monté pivotant autour de son axe (A3) et couplé audit système de transformation de mouvement (6) lorsque celui-ci est présent.

11. Machine selon l'une des revendications précédentes, **caractérisée en ce que** la machine comprenant un châssis (42), la cage (2) est montée orientable par rapport audit châssis (42) pour occuper différentes positions inclinées par rapport au châssis (42).

12. Machine selon l'une des revendications précédentes, **caractérisée en ce que** la cage (2) comprend des moyens de retenue ou de ralentissement (22) de l'avance des grappes dans la cage.

13. Machine selon l'une des revendications précédentes, **caractérisée en ce que** lesdits moyens d'entraînement (5, 3, 6) de la cage (2) selon un mouvement de va-et-vient comprennent des moyens de réglage (601) de l'amplitude du mouvement de va-et-vient de la cage (2).

14. Machine selon l'une des revendications précédentes, **caractérisée en ce que** la cage (2) est une cage montée fixe à rotation ou libre à rotation autour de son axe (A2) longitudinal.

15. Procédé d'égrappage à l'aide d'une machine d'égrappage conforme à l'une des revendications 1 à 14, **caractérisé en ce que** ledit procédé comprend, à des fins d'égrappage, une étape d'entraînement en va-et-vient de la cage (2) suivant une trajectoire prédéterminée au cours de laquelle la cage (2), en au moins un emplacement de sa longueur, parcourt, lors de sa course aller ou de sa course retour, sur au moins une partie de la période d'entraînement en déplacement de la cage une distance au moins égale à 60 mm, de préférence comprise entre 60 et 160 mm, et est, au cours de son déplacement, entraînée sur au moins une partie de sa trajectoire à une vitesse au moins égale à 0,5 m/s, de préférence comprise entre 0,5 et 4 m/s.

## Claims

1. A destalking machine with a cage (2) formed from a tubular element (20) open at its ends, designed to receive berry stalks, such as grapes with their stems,
the peripheral wall of the cage having openings dimensioned so as to allow the passage of said stems,
**characterized in that** said machine comprises means (5, 3, 6) for moving the cage (2) in a to-and-fro movement transverse to the longitudinal axis (A2) of said cage (2), said to-and-fro movement being able on the one hand to allow the separation of the berries from the clusters, and on the other hand to expel the berries through the openings of the peripheral wall of the cage, the means (5, 3, 6) for moving the cage (2) being configured so as, at least at one location of the length of the cage (2), to make the cage (2) travel for at least part of the movement period of the cage, a distance at least equal to 60 mm, preferably comprised between 60 and 160 mm, during the forward movement or backward movement of said cage (2).

2. The machine according to claim 1, **characterized in that** the means (5, 3, 6) for moving the cage (2) are configured so as, at least at one location of the length of the cage (2), to give the cage (2), midway on the path traveled by the cage (2) during its forward travel or its return travel, a movement speed at least equal to 0.5 m/s, preferably comprised between 0.5 and 4 m/s for at least part of the movement period of the cage.

3. The machine according to one of claims 1 or 2, **characterized in that** one of the ends of the cage (2) forming the inlet for inserting bunches and the opposite end of the cage (2) forming the discharge outlet for the stems, the cage (2) is coupled to support means (4) such that the cage (2) has or can occupy at least one position in which the inlet (2A) of the cage (2) is situated above the outlet (2B) of said cage (2).

4. The machine according to one of the preceding claims, **characterized in that** said means (5, 3, 6) for moving the cage (2) are means (5, 3, 6) at least for pivoting the cage (2) around an axis (A3), separate from the longitudinal axis (A2) of the cage (2), preferably outside the cage (2).

5. The machine according to claim 4, **characterized in that** the machine comprises at least one configuration in which the longitudinal axis (A2) of the cage (2) forms a non-zero angle with the pivot axis (A3) of said driving means (5, 3, 6).

6. The machine according to claim 5, **characterized in that** it comprises means (32) for adjusting the angle formed between the longitudinal axis (A2) of the cage (2) and the pivot axis (A3) of said cage (2).

7. The machine according to one of the preceding claims when dependent on claim 4, **characterized in that**, one of the ends of the cage (2) forming the inlet (2A) for inserting bunches and the opposite end of the cage (2) forming an outlet (2B) for discharging stems, the distance between the inlet (2A) of the cage (2) and the pivot axis (A3) of the cage (2) is smaller than the distance between the outlet (2B) of the cage (2) and the pivot axis (A3) of the cage (2).

8. The machine according to one of the preceding claims, **characterized in that** said means (5, 3, 6) for driving the cage (2) in a to-and-fro movement comprise a rotary motor (5) and a movement conversion system (6) coupled to said motor (5) so as to convert the rotational movement of the motor (5) into a to-and-fro movement.

9. The machine according to claim 8, **characterized in that**, said movement conversion system (6), coupled on the one hand to the rotary motor (5) and on the other hand to the pivot shaft (3), secured or able to be secured with the cage (2), is a connecting rod/handle system.

10. The machine according to any one of the preceding claims when dependent on claim 4, **characterized in that** said means (5, 3, 6) for moving the cage (2) comprise a shaft (3) secured or able to be secured with the cage (2) and having an axis (A3) combined with said pivot axis (A3) of the cage (2), said shaft (3) being pivotably mounted around its axis (A3) and coupled to said movement conversion system (6) when the latter is present.

11. The machine according to one of the preceding claims, **characterized in that** the machine comprising a chassis (42), the cage (2) is mounted so as to be able to be oriented in relation to the chassis (42) to occupy different inclined positions in relation to the chassis (42).

12. The machine according to one of the preceding claims, **characterized in that** the cage (2) comprises means (22) for retaining or slowing the advancement of the bunches in the cage.

13. The machine according to one of the preceding claims, **characterized in that** said means (5, 3, 6) for driving the cage (2) in a to-and-fro movement comprise means (601) for adjusting the amplitude of the to-and-fro movement of the cage (2).

14. The machine according to one of the preceding claims, **characterized in that** the cage (2) is a cage mounted fixed in rotation or free in rotation around its longitudinal axis (A2).

15. A destalking method using a destalking machine according to one of claims 1 to 14, **characterized in that** said method comprises, for destalking purposes, a step for to-and-fro driving of the cage (2) following a predetermined path during which the cage (2), at least at one location of its length, travels, during its forward travel or its return travel, over at least part of the driving period for moving the cage, a distance at least equal to 60 mm, preferably comprised between 60 and 160 mm, and is, during its movement, driven over at least part of its path at a speed at least equal to 0.5 m/s, preferably comprised between 0.5 and 4 m/s.

## Patentansprüche

1. Entrappmaschine, die einen Käfig (2) umfasst, der von einem an seinen Enden offenen rohrförmigen Element (20) gebildet wird, das dazu bestimmt ist, Beerentrauben aufzunehmen, wie Weintrauben mit ihrem Stiel,
wobei die periphere Wand des Käfigs Öffnungen aufweist, die derart bemessen sind, dass sie die Beeren hindurchlassen,
**dadurch gekennzeichnet, dass** die Maschine verlagernde Antriebsmittel (5, 3, 6) des Käfigs (2) gemäß einer Hin- und Herbewegung transversal zur Längsachse (A2) des Käfigs (2) umfasst, wobei die Hin- und Herbewegung imstande ist, einerseits die Trennung der Beeren von den Trauben und andererseits das Auswerfen der Beeren durch die Öffnungen der peripheren Wand des Käfigs zu erlauben, wobei die verlagernden Antriebsmittel (5, 3, 6) des Käfig (2) konfiguriert sind, um an mindestens einer Stelle der Länge des Käfigs (2) den Käfig (2) während mindestens eines Teils der Periode des verlagernden Antriebs des Käfigs eine Distanz von mindestens gleich 60 mm, vorzugsweise zwischen 60 und 160 mm inklusive, während der Hinbewegung oder der Zurückbewegung des Käfigs (2) zurücklegen zu lassen.

2. Maschine nach Anspruch 1, **dadurch gekennzeichnet, dass** die verlagernden Antriebsmittel (5, 3, 6) des Käfigs (2) konfiguriert sind, um an mindestens einer Stelle der Länge des Käfigs (2) dem Käfig (2) auf halbem Weg der vom Käfig (2) während seines Hinlaufs oder seines Rücklaufs zurückgelegten Bahn eine Verlagerungsgeschwindigkeit von mindestens gleich 0,5 m/s, vorzugsweise von zwischen 0,5 und 4 m/s inklusive, während mindestens eines Teils der Periode des verlagernden Antrieb des Käfigs zu präsentieren.

3. Maschine nach einem der Ansprüche 1 oder 2, **dadurch gekennzeichnet, dass** eines der Enden des Käfigs (2) die Eingangsöffnung der Trauben bildet und das entgegengesetzte Ende des Käfigs (2) die Ausgangsöffnung der Stiele bildet, wobei der Käfig (2) derart an Haltemittel (4) gekoppelt ist, dass der Käfig (2) mindestens eine Position einnimmt oder imstande ist einzunehmen, in der sich der Eingang (2A) des Käfigs (2) über dem Ausgang (2B) des Käfigs (2) befindet.

4. Maschine nach einem der vorangehenden Ansprüche, **dadurch gekennzeichnet, dass** die verlagernden Antriebsmittel (5, 3, 6) des Käfigs (2) Antriebsmittel (5, 3, 6) sind, die den Käfig (2) mindestens um eine Achse (A3) schwenkend antreiben, die sich von der Längsachse (A2) des Käfigs (2) unterscheidet, vorzugsweise außerhalb des Käfigs (2).

5. Maschine nach Anspruch 4, **dadurch gekennzeichnet, dass** die Maschine mindestens eine Konfiguration umfasst, in der die Längsachse (A2) des Käfigs (2) mit der Schwenkachse (A3) der Antriebsmittel (5, 3, 6) einen Winkel von nicht null bildet.

6. Maschine nach Anspruch 5, **dadurch gekennzeichnet, dass** sie Einstellmittel (32) des Winkels umfasst, der zwischen der Längsachse (A2) des Käfigs (2) und der Schwenkachse (A3) des Käfigs (2) gebildet wird.

7. Maschine nach einem der vorangehenden Ansprüche, herangezogen in Abhängigkeit von Anspruch 4, **dadurch gekennzeichnet, dass**, wobei eines der Enden des Käfigs (2) die Eingangsöffnung (2A) der Trauben bildet und das entgegengesetzte Ende des Käfigs (2) die Ausgangsöffnung (2B) der Stiele bildet, die Distanz zwischen dem Eingang (2A) des Käfigs (2) und der Schwenkachse (A3) des Käfigs (2) kleiner ist als die Distanz zwischen dem Ausgang (2B) des Käfigs (2) und der Schwenkachse (A3) des Käfigs (2).

8. Maschine nach einem der vorangehenden Ansprüche, **dadurch gekennzeichnet, dass** die Antriebsmittel (5, 3, 6) des Käfigs (2) gemäß einer Hin- und Herbewegung einen Drehmotor (5) und ein System zur Bewegungsumwandlung (6) umfassen, das mit dem Motor (5) derart gekoppelt ist, dass die Drehbewegung des Motors (5) in eine Hin- und Herbewegung umgewandelt wird.

9. Maschine nach Anspruch 8, **dadurch gekennzeichnet, dass** das System zur Bewegungsumwandlung (6), das einerseits mit dem Drehmotor (5) und andererseits mit dem Wellenzapfen (3) gekoppelt ist, der mit dem Käfig (2) verbunden oder verbindbar ist, ein System der Bauart Pleuel/ Kurbel ist.

10. Maschine nach einem der vorangehenden Ansprüche, herangezogen in Abhängigkeit von Anspruch 4, **dadurch gekennzeichnet, dass** die verlagernden Antriebsmittel (5, 3, 6) des Käfigs (2) eine Welle (3) umfassen, die mit dem Käfig (2) und verbunden oder verbindbar ist, und einer Achse (A3), die mit der Schwenkachse (A3) des Käfigs (2) zusammenfällt, wobei die Welle (3) um ihre Achse (A3) schwenkend montiert ist und an das System zur Bewegungsumwandlung (6) gekoppelt ist, wenn es präsent ist.

11. Maschine nach einem der vorangehenden Ansprüche, **dadurch gekennzeichnet, dass** die Maschine einen Rahmen (42) umfasst, wobei der Käfig (2) im Verhältnis zum Rahmen (42) ausrichtbar montiert ist, um verschiedene, im Verhältnis zum Rahmen (42) geneigt Positionen einzunehmen.

12. Maschine nach einem der vorangehenden Ansprüche, **dadurch gekennzeichnet, dass** der Käfig (2) Rückhalte- oder Verlangsamungsmittel (22) des Vorschubs der Trauben im Käfig umfasst.

13. Maschine nach einem der vorangehenden Ansprüche, **dadurch gekennzeichnet, dass** die Antriebsmittel (5, 3, 6) des Käfigs (2) gemäß einer Hin- und Herbewegung Einstellmittel (601) der Amplitude der Hin- und Herbewegung des Käfigs (2) umfassen.

14. Maschine nach einem der vorangehenden Ansprüche, **dadurch gekennzeichnet, dass** der Käfig (2) ein Käfig ist, der um seine Längsachse (A2) in Rotation starr oder in Rotation frei montiert ist.

15. Entrappverfahren mit Hilfe einer Entrappmaschine, die einem der Ansprüche 1 bis 14 entspricht, **dadurch gekennzeichnet, dass** das Verfahren zum Zweck des Entrappens einen Hin- und Her-Antriebsschritt des Käfigs (2) gemäß einer vorbestimmten Bahn umfasst, auf der der Käfig (2) an mindestens einer Stelle seiner Länge bei seinem Hinlauf oder seinem Rücklauf über mindestens einen Teil der verlagernden Antriebsperiode des Käfigs eine Distanz von mindestens gleich 60 mm, vorzugsweise zwischen 60 und 160 mm inklusive, zurücklegt und während seiner Verlagerung über mindestens einen Teil seiner Bahn mit einer Geschwindigkeit von mindestens gleich 0,5 m/s, vorzugsweise zwischen 0,5 und 4 m/s inklusive, angetrieben wird.
